Europäisches Patentamt

(19) European Patent Office          (11) Veröffentlichungsnummer: **0 168 638**

Office européen des brevets                              **B1**

(12)          **EUROPÄISCHE PATENTSCHRIFT**

(45) Veröffentlichungstag der Patentschrifft:          (51) Int. Cl. ⁵: **C 04 B 40/00**, C 04 B 20/10,
07.02.90                                                    G 21 F   9/16

(21) Anmeldenummer: 85107290.0

(22) Anmeldetag: 13.06.85

(54) Verfahren zur Herstellung deponierbarer Produkte aus umweltgefährdeten Salzgemischen.

(30) Priorität: 20.07.84 DE 3426800

(43) Veröffentlichungstag der Anmeldung:
22.01.86 Patentblatt 86/04

(45) Bekanntmachung des Hinweises auf die Patenterteilung:
07.02.90 Patentblatt 90/06

㊽ Bennante Vertragsstaaten:
AT CH DE GB LI SE

(56) Entgegenhaltungen:
DE-A-3 150 419
FR-A-2 424 611
FR-A-2 471 265
GB-A-842 592

PATENT ABSTRACTS OF JAPAN, Band 7, Nr. 252 (C-194) 1397 , 9. November 1983; & JP - A - 58 139 777 (EBARA INFILCO K.K.) 19.08.1983

PATENT ABSTRACTS OF JAPAN, Band 7, Nr. 175 (C-179) 1320 , 3. August 1983; & JP - A - 58 081 476

(73) Patentinhaber: Nukem GmbH
Rodenbacher Chaussee 6 Postfach 11 00 80
D-6450 Hanau 11 (DE)

(72) Erfinder: Brunner, Herbert, Dr. Dipl.-Chem.
Grünaustrasse 15
D-6450 Hanau 9 (DE)
Erfinder: Ganser, Benno, Dr. Dipl.-Chem.
Taunusstrasse 6
D-8755 Alzenau (DE)
Erfinder: Neupert, Daniel, Dr. Dipl.-Chem.
Rannenbergring 47
D-8755 Alzenau (DE)
Erfinder: Huschka, Hans, Dr. Dipl.-Chem.
Grünaustrasse 5
D-6450 Hanau 9 (DE)
Erfinder: Maurer, Paul-Gerhard, Dr. Dipl.-Chem.
Bergstrasse 1
D-6451 Neuberg II (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Die Erfindung betrifft ein Verfahren zur Herstellung deponierbarer Produkte aus trockenen, großteils wasserlöslichen, beim Lösen wärmeentwickelnden, umweltgefährdenden Salzgemischen, durch Versetzen mit hydraulischen Bindemitteln und gegebenenfalls Zusatzstoffen, mit anschliessender Kompaktierung und wasserdichter Umhüllung der Formkörper.

Trockene, zum Teil wasserlösliche Salzgemische, die infolge ihres Gehaltes an toxischen Inhaltsstoffen in die Kategorie der Sonderabfälle gehöhren, müssen in eine deponierbare Form gebracht werden. Solche Salzgemische fallen beispielsweise bei der trockenen Abgaswäsche von Sonderabfallverbrennungsanlagen an. Für die Deponierung derartiger Sonderabfälle bestehen seitens des Gesetzgebers Auflagen, die im wesentlichen darauf abzielen, eine Grundwassergefährdung auszuschließen. Ist eine Rezyklierung des Abfallstoffs nicht möglich oder aus Kostengründen nicht zu vertreten, kommt entweder eine Lagerung unter Tage, oder eine aufwendige Verpackung bzw. Konditionierung mit anschließender Deponierung über Tage in Frage.

Auf dem Gebiet der Verfestigung von Sonderabfällen sind eine Vielzahl von Verfahren bekannt und zum Teil im Einsatz. Als Konditionierungsmittel dienen beispielsweise Zement, Wasserglas, Puzzolan, Kalk, Gips oder organische Polymere.

Die Auswahl des Konditionierungsmittels richtet sich nach der chemischen Natur der Schadstoffe, den Anforderungen an das Rückhaltevermögen und nach den mechanischen Eigenschaften des Endprodukts. Daneben ist auch die Wirtschaftlichkeit des Verfestigungsverfahrens zu berücksichtigen. Diese wird nicht nur durch den Preis des Konditionierungsmittels sondern in entscheidendem Maße auch durch die Beladungskapazität des Produkts mit Schadstoffen bestimmt.

Bisher erwies sich der Einsatz von Zement als Konditionierungsmittel für die Verfestigung als vergleichsweise kostspielig. Haupteinsatzgebiet für Zement als Konditionierungsmittel ist heute die Kerntechnik, wo er zur Konditionierung radioaktiver Abfallstoffe verwendet wird. Die maximale Beladung mit salzhaltigen Produkten beträgt hier maximal ca. 10 - 20 %, wobei die radioaktiven Salze meist in Form ihrer wäßrigen Lösung oder als Schlamm zementiert werden.

Neben dieser sogenannten homogenen Konditionierung sind aus der Kerntechnik auch noch andere Varianten der Konditionierung bekannt. So wird beispielsweise in der DE-OS-2 819 086 vorgeschlagen, wäßrige Abfallsflüssigkeiten mit Hilfe einer saugfähigen tonigen Substanz und/oder eines hydraulischen Bindemittels in ein Granulat umzuwandeln, das dann mit einer wasserdichten Schicht umhüllt und/oder in einer Matrix aus Kunststoffen oder hydraulischen Bindemitteln eingebettet wird. Auch hier sind nur Salzbeladungen des Granulats von maximal 20 - 25 % erzielbar. Beim Einfüllen in Behälter und anschließender Einbettung des Granulats oder der Pellets in die Matrix ergibt sich ein mittlerer Schadstoffgehalt im Endprodukt von weit weniger als 20 %.

Um die Schadstoffbeladung von Konditionierungsprodukten zu erhöhen, wurde in der DE-OS-3 150 419 vorgeschlagen, die Pellets in einem so abgestimmten Kornspektrum herzustellen, daß die Kugelkörper der kleinen Klassierung die von den Kugelkörpern der großen Klassierung gebildeten Räume ideal verfüllen. Die Schadstoffbeladung im Endprodukt erreicht aber selbst bei idealer Raumausfüllung höchstens den im Pellet selbst erzielten Schadstoffanteil und ist damit auf Werte von maximal 25 % begrenzt.

Auf dem konventionellen Sektor hat die Zementierung hauptsächlich als Konditionierungsverfahren für Säureharze, wäßrige schlämme und Ölschlämme Eingang gefunden. Die Konditionierung weitgehend wasserlöslicher Salze in Zement kam aber bisher nicht zum Einsatz, da der Salzgehalt im Zementprodukt durch die Beeinträchtigung des Erstarrungs- und Abbindeverhaltens auf relativ niedrige Werte begrenzt ist.

Es war daher Aufgabe der vorliegenden Erfindung, ein Verfahren zur Herstellung deponierbarer Produkte aus trockenen, großteils wasserlöslichen, beim Lösen Wärme entwickelnden, umweltgefährdenden Salzgemischen zu entwickeln, durch Versetzen mit hydraulischen Bindemitteln und gegebenenfalls Zusatzstoffen, mit anschließender Kompaktierung und wasserdichter Umhüllung der Formkörper, das eine hohe Salzbeladung ermöglicht, die Rückhaltung der toxischen Inhaltsstoffe gewährleistet und ein Produkt mit guten mechanischen Eigenschaften liefert.

Diese Aufgabe wurde erfindungsgemäß dadurch gelöst, daß das Salzgemisch zuerst mit 10 bis 50 Gew.-% Zement trocken vorgemischt, dann mit Wasser und/oder oder einer wäßrigen Kunststoffdispersion bis zu einem Wasser/Zementwert von 0,3 bis 0,6 versetzt, noch während der Wärmeentwicklung des Salzgemisches zu sphärischen Formkörpern kompaktiert wird und anschließend diese Formkörper mit einer 0,1 bis 5 mm dicken Bitumenschicht versehen und in eine Zementmatrix eingebettet werden.

Vorzugsweise wird das Wasser unter Einhaltung des Wasser/Zementwertes von 0,3 bis 0,6 portionsweise in Mengen zugesetzt, die eine Temperaturerhöhung im Gemisch auf mindestens 50°C bewirken. Zu diesem Zweck kann man auch heißes Wasser zugeben. Bei dieser Temperatur tritt die anfängliche Hydration des Salzgemisches zugunsten des hydraulischen Abbindens des Zements in den Hintergrund und fast das gesamte Wasser wird zur Zementsteinbildung, die durch erhöhte Temperatur zudem beschleunigt wird, verbraucht.

Als Zementsorte wird vorteilhaft Portlandzement eingesetzt. Insbesondere in dem Fall, das das Salzgemisch Sulfatanteile enthält, ist es von Vorteil, ein Portlandzement mit sehr kleinem Anteil an Calciumaluminat ($C_3A$) zu verwenden, wodurch ein "Gipsaustreiben", bedingt durch Ettringitbildung, verhindert wird.

Wird noch während der Wärmeentwicklung das Salz/Zement/Wasser-Gemisch kompaktiert, so erhärten die Formkörper bei Verwendung von Portlandzement innerhalb 24 Stunden zu einem steinharten und mechanisch stabilen Produkt. Der Salzgehalt dieser Formkörper beträgt 40 - 80 %. Das Abbinden des Zements kann dadurch beschleunigt werden, daß das Zement/Salz-Gemisch mit heißem Wasser versetzt wird. Dies hat sich vor allem dann als vorteilhaft herausgestellt, wenn bedingt durch die Salzzusammensetzung die Wärmeentwicklung durch Hydration der Salze zu einer Temperaturerhöhung auf weniger als ca. 50 - 60°C führt.

Um die Wasserbeständigkeit des Formkörpers zu erhöhen, kann das Wasser für den Zement ganz oder teilweise durch eine wäßrige Kunststoffdispersion ersetzt werden, wobei sich wäßrige Acrylatdispersionen mit Feststoffgehalten von ca. 50 % besonders gut bewährt haben.

Die Herstellung der Formkörper erfolgt normalerweise in der Art, daß Zement und Salz entweder chargenweise oder kontinuierlich im gewünschten Mischungsverhältnis zuerst trocken vorgemischt werden und dieses Gemisch unter Zudosierung von kaltem oder heißem Wasser oder einer wäßrigen Kunststoffdispersion in einem kontinuierlichen Rührwerksmischer gemischt werden. Infolge des kleinen Wasser/Zementwertes entsteht beim Mischen durch das extreme Verhältnis von Wasser zu Trockenprodukt (Zement + Salzgemisch) ein erdfeuchtes krümeliges Produkt, das beispielsweise direkt einer Kompaktiermaschine zugeführt werden kann, wo es verdichtet und geformt wird. Nach dem Kompaktieren müssen die Formkörper mit Bitumen beschichtet werden, wobei sich eine Schichtdicke von 0,2 bis 2 mm als besonders vorteilhaft herausgestellt hat. Vorzugsweise werden die Formkörper vor dem Beschichten mit Bitumen in Wachs- oder Paraffinschmelzen hydrophobiert.

Die Beschichtung mit Bitumen erfolgt ebenfalls durch Eintauchen in eine Schmelze. Um ein Zusammenkleben der bituminierten Formkörper zu verhindern, werden sie vorteilhafterweise in noch warmen Zustand in einer rotierenden Siebtrommel mit Sand kleiner Kornfraktion oder Zementpulver kontaktiert. Die so erhaltenen bituminierten und besandeten Formkörper können dann als schüttfähiges Gut in eine Deponie verbracht werden.

Um die Tragfähigkeit des so erzeugten Deponieproduktes zu erhöhen und gleichzeitig eine zweite Barriere gegen eine mögliche Auslaugung aufzubauen, kann das freie Volumen zwischen den Formkörpern durch eine Zementmatrix verfüllt werden, ohne daß ein Einfluß des für die Matrixherstellung erforderlichen Wassers auf die diskreten Formkörper wirksam und der Abbindevorgang gestört werden kann. Das so erhaltene auslaugfeste Endprodukt besitzt dann einen Schadstoffanteil von 25 - 50 Gew.-%.

Die bitumierten Formkörper eignen sich auch zur sogenannten in-situ-Verfestigung. Dazu werden sie in einen Zementmörtel eingerührt und über eine Förderleitung in unterirdische Kavernen oder Hohlräume eingepumpt. Die Größe der Formkörper muß dabei dem Leitungsquerschnitt angepaßt werden, sie sollten aber nach Möglichkeit mittlere Durchmesser von 0,5 bis 4 cm besitzen.

Um eine möglichst korrosionsbeständige Zementmatrix zu erhalten, ist es vorteilhaft, für die äußere Zementmatrix Hochofenzement einzusetzen und einen möglichst geringen Wasser/Zement-Wert einzuhalten. In der Praxis haben sich W/Z-Werte von 0,20 - 0,45 bewährt.

Folgendes Beispiel soll das erfindungsgemäße Verfahren näher erläutern:

5 kg eines Salzgemisches aus 13 % Na, 11 % Ca, 1,2 % Fe, 1,2 % Zn, 1 % Schwermetalle, 0,5 % Al, 0,25 % Mg, 38 % Chlorid, 16 % Sulfat und 0,2 % Fluorid wurden mit 3,3 kg Portlandzement trocken gemischt. In diese Mischung wurden in einem schnellaufenden Rührwerksmischer portionsweise insgesamt 1,3 kg Wasser zugesetzt und das Rühren so lange fortgesetzt, bis sich ein homogen aussehendes, krümeliges, erdfeuchtes Produkt bildete. Die Temperatur dieser Mischung stieg dabei auf ca. 60 °C an. Unmittelbar nach Beendigung des Rührens wurde das Produkt in einer Siliconkautschukmatrize isostatisch zu annähernd runden Körpern mit Durchmessern von ca. 15 mm verpreßt.

Die so erhaltenen Formkörper wurden 24 Stunden gelagert und dann in einem Siebkorb 2 Minuten lang in eine 170°C heiße Bitumenschmelze getaucht. Überschüssige Bitumenschmelze tropfte nach dem Herausnehmen des Siebkorbs aus der Schmelze ab. Noch vor dem Erkalten wurden die bitumenbeschichteten Formkörper in eine rotierende Siebtrommel gegeben und dort mit Zementpulver beaufschlagt. Die bituminierten und mit Zementpulver beschichteten Formkörper wurden nach dem vollständigen Erkalten aus der rotierenden Siebtrommel als schüttfähiges Gut entnommen und anschließend in eine Zementmilch aus 4,6 kg Hochofenzement und 1,4 kg Wasser eingerührt. Nach dem hydraulischen Abbinden dieser äußeren Zementmatrix wurde ein Produkt mit einem Bruttosalzgehalt von über 30 Gew.-% erhalten.

Nach einem 3-monatigen Auslaugversuch in Wasser bei Raumtemperatur konnte kein Bestandteil des Salzgemisches in der Auslaugflüssigkeit nachgewiesen werden.

## Patentansprüche

1. Verfahren zur Herstellung deponierbarer Produkte aus trockenen, großteils wasserlöslichen, beim Lösen Wärme entwickelnden, umweltgefährdenden Salzgemischen durch Versetzen mit hydraulischen Bindemitteln und gegebenenfalls Zusatzstoffen, mit anschließender Kompaktierung und wasserdichter Umhüllung der Formkörper, *dadurch gekennzeichnet*, daß das Salzgemisch zuerst mit 10 - 50 Gew.-% Zement trocken vorgemischt, dann mit Wasser und/oder einer wäßrigen Kunststoffdispersion bis zu einem Wasser/Zementwert von 0,3 - 0,6 versetzt, noch während der Wärmeentwicklung des Salzgemisches zu sphärischen Formkörpern kompaktiert wird und anschließend diese Formkörper mit einer 0,1 - 5 mm dicken Bitumenschicht versehen und in eine Zementmatrix eingebettet werden.

2. Verfahren nach Anspruch 1, *dadurch gekennzeichnet*, daß das Wasser unter Einhaltung der Grenzen des Wasser/Zementwertes von 0,3 - 0,6 portionsweise in Mengen zugesetzt wird, die eine Temperaturerhöhung auf mindestens 50°C bewirken.

3. Verfahren nach Anspruch 1 und 2, *dadurch gekennzeichnet*, daß das Salz/Zementgemisch mit heißem Wasser versetzt wird.

4. Verfahren nach den Ansprüchen 1 bis 3, *dadurch gekennzeichnet*, daß als Kunststoffdispersion eine Acrylatdispersion verwendet wird.

5. Verfahren nach den Ansprüchen 1 bis 4, *dadurch gekennzeichnet*, daß die Formkörper vor der Beschichtung mit Bitumen durch Eintauchen in Wachs- oder Paraffinschmelzen hydrophobiert werden.

6. Verfahren nach den Ansprüchen 1 bis 5, *dadurch gekennzeichnet*, daß die Beschichtung der Formkörper mit Bitumen in einer Schichtdicke von 0,2 - 2 mm erfolgt.

7. Verfahren nach den Ansprüchen 1 bis 6, *dadurch gekennzeichnet*, daß die bitumenbeschichteten Formkörper in noch plastischen Zustand der Bitumenschicht mit Zementpulver oder Sand kleiner Kornfraktion kontaktiert und die so erhaltenden Formkörper heterogen in ein Zement/Wasser-Gemisch mit Wasser/Zement-Werten von 0,20 - 0,45 eingebettet werden.

## Claims

1. Process for the preparation of products which can be dumped and result from dry, for the most part water-soluble environmentally hazardous salt mixtures which evolve heat on dissolving, by adding hydraulic binders and if appropriate additives, with subsequent compaction and water-tight encasing of the shaped bodies, *characterized in that* the salt mixture is first pre-mixed in the dry state with 10 to 50 wt.-% cement, water and/or an aqueous plastics dispersion is then added up to a water/cement value of 0.3 - 0.6, the mixture is compacted to spherical shaped bodies while the salt mixture is still evolving heat, and these shaped bodies are then provided with a bitumen coating 0.1 - 5 mm thick and embedded in a cement matrix.

2. Process according to claim 1, *characterized in that* the water is added in portions, observing the limits of the water/cement value of 0.3 - 0.6, in amounts which effect an increase in the temperature to at least 50°C.

3. Process according to claim 1 and 2, *characterized in that* hot water is added to the salt/cement mixture.

4. Process according to claims 1 to 3, *characterized in that* an acrylate dispersion is used as the plastics dispersion.

5. Process according to claims 1 to 4, *characterized in that* the shaped bodies are rendered hydrophobic by being dipped into melts of wax or paraffin before being coated with bitumen.

6. Process according to claims 1 to 5 *characterized in that* the coating of the shaped bodies with bitumen is carried out in a coating thickness of 0.2 - 2 mm.

7. Process according to claims 1 to 6, *characterized in that* the bitumen-coated shaped bodies are brought into contact in the still plastic state of the bitumen layer with cement powder or sand of small particle fraction and the shaped bodies thus obtained are embedded heterogeneously into a cement/water mixture with water/cement values of 0.2 - 0.45.

## Revendications

1. Procédé d'obtention de produits que l'on peut décharger, à partir de mélanges salins secs dangereux pour l'environnement en grande partie solubles dans l'eau et dont la dissolution est exothermique, par mélange avec des liants hydrauliques et le cas échéant des additifs, compactable subséquent et enrobage des corps moulés dans une matière étanche à l'eau, caractérisé en ce que l'on effectue un mélange préalable à sec du mélange de sels avec 10 à 50 % en poids de ciment avant de le mélanger avec de l'eau et/ou une dispersion aqueuse de matières synthétiques jusqu'à obtenir un rapport eau/ciment de 0,3 à 0,6, puis alors qu'il dégage encore de la chaleur, on compacte le mélange de sels, de façon à obtenir des corps moulés sphériques que l'on munit d'une couche de bitume de 0,1 à 5 mm d'épaisseur et que l'on enrobe dans une matrice de ciment.

2. Procédé selon la revendication 1, caractérisé en ce que tout en maintenant les limites du rapport eau/ciment de 0,3 à 0,6, l'on ajoute l'eau par portions dans des quantités entraînant une élévation de la température d'au moins 50°C.

3. Procédé selon la revendication 1 et 2, caractérisé en ce que le mélange sels/ciment est mélangé avec de l'eau chaude.

4. Procédé selon les revendications 1 à 3, caractérisé en ce que en tant que dispersion de matière synthétiques, on utilise une dispersion d'acrylates.

5. Procédé selon les revendications 1 à 4, caractérisé en ce que avant de les recouvrir par une couche de bitume, on rend les corps moulés hydrophobes par l'immersion dans de la cire ou de la paraffine fondue.

6. Procédé selon les revendications 1 à 5, caractérisé en ce que l'épaisseur de la couche de bitume qui recouvre les corps moulés est égale à 0,2 à 2 mm.

7. Procédé selon les revendications 1 à 6, caractérisé en ce que la couche de bitume est encore à l'état plastique, on met en contact les corps moulés ainsi recouverts avec de la poudre de ciment ou des sable à grains fins et l'on enrobe les corps moulés ainsi obtenus d'une manière hétérogène dans un mélange ciment/eau avec un rapport eau/ciment de 0,20 à 0,45.